# EUROPÄISCHE PATENTSCHRIFT

(11) **EP 2 052 911 B1**
(45) Veröffentlichungstag und Bekanntmachung des Hinweises auf die Patenterteilung: **29.09.2010**
(21) Anmeldenummer: 08167483.0
(22) Anmeldetag: 24.10.2008
(51) Int. Cl.: B60Q 1/14, G06K 9/00

(54) **Anordnung für Kraftfahrzeuge zum Erkennen der Umgebungshelligkeit während der Fahrt des Kraftfahrzeugs**
Assembly for motor vehicles for recognising the ambient light during the journey of the motor vehicle
Agencement pour véhicules automobiles destiné à la reconnaissance de la clarté ambiante lors de la marche du véhicule automobile

(30) Priorität: 26.10.2007 DE 102007051268
(43) Veröffentlichungstag der Anmeldung: 29.04.2009
(73) Patentinhaber: Hella KGaA Hueck & Co., 59552 Lippstadt (DE)
(72) Erfinder: Schwarz, Sergej, 70825, Korntal-Münchingen (DE)

(56) Entgegenhaltungen:
- EP-A- 1 837 803
- DE-A1- 19 820 348
- DE-A1- 19 837 160
- US-A1- 2002 040 962
- US-A1- 2004 143 380

## Beschreibung

Die Erfindung betrifft eine Anordnung für Kraftfahrzeuge zum Erkennen der Umgebungshelligkeit während der Fahrt des Kraftfahrzeugs, insbesondere der Umgebungshelligkeit aufgrund von Laternen zur Straßenbeleuchtung. Eine solche Anordnung kann ein Sensormittel aufweisen, dass einen Fototransistor, ein Fotoelement oder eine Fotodiode umfasst. Ferner kann die Anordnung ein Auswertemittel aufweisen. Das Sensormittel ist geeignet und eingerichtet, das Licht der Umgebung zu erfassen und ein der Helligkeit entsprechendes Signal zu erzeugen. Das Auswertemittel ist geeignet und eingerichtet, zu erkennen, dass wegen des Umgebungslichts ein Einschalten oder Ausschalten des Fernlichtes erforderlich ist.

Aus der Druckschrift mit der Veröffentlichungsnummer DE 27 05 320 A1 ist eine Fahrzeugscheinwerfersteuerschaltung bekannt, die die Beleuchtung einer Straße mit Laternen erkennen kann. In Abhängigkeit von der Straßenbeleuchtung wird dann der Fahrzeugscheinwerfer gesteuert. Die Detektion einer Straßenbeleuchtung, wie sie in der Druckschrift offenbart ist, ist dagegen für die Steuerung eines Fernlichtassistenten nicht ausreichend.

Ferner sind zum Beispiel aus der Druckschrift US 6,653,614 B2 Steuersysteme für das automatische Steuern von Kraftfahrzeugscheinwerfern bekannt, die mittels eines Bilderfassungs- und Bildverarbeitungssystems die Helligkeit des Umgebungslichts ermitteln kann, um einen Fernlichtassistenten eines Kraftfahrzeugs zu steuern. Die Benutzung eines Bilderfassungs- und -verarbeitungssystems, wie es aus der zuletzt genannten Druckschrift bekannt ist, lediglich zur Erfassung der Helligkeit der Umgebung ist sehr aufwändig und kostenintensiv. Auch in der Druckschrift EP 1 837 803 A2 ist ein Bilderfassungssystem beschrieben, mit welchem eine Straßenbeleuchtung erkannt werden kann.

In der Druckschrift US 2004/0143380 A1 ist ein Bilderfassungssystem beschrieben, mit welchem die durch Straßenlaternen erzeugte Helligkeit erkannt werden kann. Das System ist ferner in der Lage zu erkennen, ob sich das Fahrzeug in einem gut beleuchteten Bereich wie zum Beispiel einer Stadt befindet. Ist das der Fall, wird das Fernlicht deaktiviert. Auch dieses System ist aufwändig gestaltet.

Die Druckschrift DE 198 20 348 A1 beschreibt die Idee eine Photozelle zu nutzen, um die nicht durch Verkehrsteilnehmer verursachte Lichtstärke, also die Umgebungshelligkeit zu erkennen und gegebenenfalls das Fernlicht ein- oder auszuschalten. Eine konkrete technische Lösung ist in der Druckschrift allerdings nicht beschrieben. Insbesondere ist nicht beschrieben, wie ein Zug von Laternen erkannt werden kann, der sich entlang eines von dem Kraftfahrzeug durchfahrenen Streckenabschnitts erstreckt.

Auch die Druckschrift DE 198 37 160 A1 offenbart einen Sensor, der zur Erfassung der Umgebungshelligkeit genutzt werden kann. In Abhängigkeit von der erfassten Helligkeit kann eine Beleuchtungseinrichtung eines Kraftfahrzeugs angesteuert werden.

Hier setzt die vorliegende Erfindung an.

Der vorliegenden Erfindung liegt die Aufgabe zugrunde, eine Anordnung der eingangs genannten Art so weiterzubilden, dass nicht nur die Beleuchtung einer Straße durch Laternenund insbesondere ein Zug von Laternen detektiert werden kann, um das Fernlicht eines Kraftfahrzeugs an- oder auszuschalten. Bei der Anordnung soll dabei möglichst auf aufwändige Bilderfassungs- und Bildverarbeitungssysteme verzichtet werden.

Diese Aufgabe wird erfindungsgemäß dadurch gelöst, dass das Auswertemittel (µC) geeignet und eingerichtet ist beim Überschreiten eines Schwellwerts innerhalb eines ersten Zeitintervalls durch das von dem Sensormittel (T_{F}) erzeugte Signal eine Laterne zu erkennen und das Auswertemittel geeignet und eingerichtet ist bei einem mehrfachen Erkennen von Laternen (µC) innerhalb eines zweiten Zeitintervalls eine ausreichende Umgebungshelligkeit zu erkennen.

Der Vorteil der erfindungsgemäßen Anordnung ist zum einen die Verwendung von einfachen Sensormitteln, die keine komplexe Bildverarbeitung erforderlich machen und andererseits eine Eignung und Bestimmung der Auswertemittel dazu, nicht nur eine ausreichende Beleuchtung durch eine einzelne Straßenlaterne, sondern eine ausreichende Helligkeit durch einen Zug von Laternen zu erfassen und auszuwerten.

Gemäß der Erfindung kann das Auswertemittel geeignet und eingerichtet sein, einen Zug von Laternen und eine einzelne Laterne zu unterscheiden. Von einem Zug von Laternen wird gesprochen, sofern mehrere Straßenlaternen in einem angemessenen Abstand entlang des Straßenverlaufs angeordnet sind, um die Straße zu beleuchten.

Das Auswertemittel kann dazu vorgesehen sein, ein Signal zum Anzeigen einer ausreichenden Umgebungshelligkeit eines Zugs von Laternen zu erzeugen. Da eine einzelne Laterne in der Regel nicht so ausreichend zur Beleuchtung einer Straße beiträgt, dass auf das Fernlicht verzichtet werden kann, ist eine Unterscheidung zwischen einer einzelnen Laterne und einem Zug von Laternen erforderlich. Sobald das Auswertemittel einen Zug von Laternen erkannt hat, kann es dafür Sorge tragen, dass das Steuergerät eines Kraftfahrzeugscheinwerfers ein Signal erhält, welches eine ausreichende Beleuchtung durch einen Laternenzug anzeigt.

Die Anordnung kann ein Steuermittel, insbesondere ein Steuergerät umfassen, das geeignet und eingerichtet ist, die Kraftfahrzeugscheinwerfer zum Ausschalten des Fernlichtes anzusteuern, sofern eine ausreichende Umgebungshelligkeit, insbesondere ein Zug von Laternen erkannt worden ist.

Sofern das Auswertemittel beim Überschreiten eines Schwellwerts des Ausgangssignals des Sensormittels innerhalb eines Zeitraums, der länger ist als ein drittes Zeitintervall, erkennt, liegt eine ausreichende Umgebungshelligkeit abhängig von Straßenlaternen vor, zum Beispiel aufgrund der Sonneneinstrahlung bei Dämmerung. Auch dann kann das Fernlicht ausgeschaltet werden oder ausgeschaltet bleiben.

Die Länge der Intervalle kann abhängig von der Geschwindigkeit des Kraftfahrzeugs sein.

In dem Auswertemittel kann beispielsweise ein Zähler vorgesehen sein, der jedes Mal dann inkrementiert wird, wenn er eine einzelne Laterne erkennt. Sofern innerhalb des zweiten Zeitintervalls keine weitere Laterne erkannt wird, d. h., der Zähler nicht ein weiteres Mal inkrementiert wird, und somit kein Zug von Laternen vorliegt, wird der Zähler zurückgesetzt. Sobald der Zählerstand allerdings innerhalb des zweiten Intervalls einen vorgegebenen Wert überschreitet, kann von einem Laternenzug entlang der Straße ausgegangen werden. Es wird dann eine ausreichende Umgebungshelligkeit erkannt und angezeigt.

Das Sensormittel hat vorzugsweise einen Öffnungswinkel von +/- 30°, mindestens jedoch von +/- 20° um eine möglichst große Menge des Umgebungslichts aufnehmen zu können. Damit das Sensormittel nicht das Licht eines vorausfahrenden oder entgegenkommenden Fahrzeugs irrtümlich als Umgebungslicht erkennt, ist die lichtempfindliche Oberfläche eines Sensormittels vorzugsweise um 35° bis 55°, vorzugsweise um 45° zu einer horizontalen Ebene beziehungsweise einer Ebene des Kraftfahrzeugs geneigt.

Vorzugsweise handelt es sich bei dem Auswertemittel um eine Mikroprozessorsteuerung (Microcontroller).

Anhand der beigefügten Zeichnungen wird die Erfindung nachfolgend näher erläutert. Dabei zeigt:

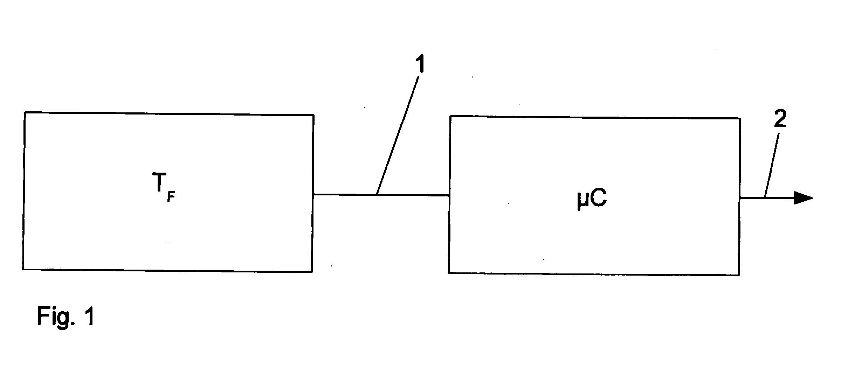

- Fig. 1: ein Blockschaltbild einer erfindungsgemäßen Anordnung und
- Fig. 2: einen möglichen Signalverlauf des Signals am Ausgang des Sensormittels.

Die erfindungsgemäße Anordnung weist ein Sensormittel T_{F} auf, welches durch einen Fototransistor gebildet ist. Das Sensormittel hat einen Ausgang, das mit einer Leitung 1 mit einem Auswertemittel µC verbunden ist, wobei das Auswertemittel µC durch eine Mikroprozessorsteuerung (microcontroller) gebildet ist. Der Ausgang des Auswertemittels µC ist über eine Leitung 2 mit einem nicht dargestellten Steuergerät für einen Kraftfahrzeugscheinwerfer verbunden.

Das Sensormittel T_{F} der erfindungsgemäßen Anordnung ist so ausgerichtet, dass die lichtempfindliche Fläche des Sensormittels eine Neigung von ca. 45° gegenüber einer horizontalen Ebene des Kraftfahrzeugs hat. Das Sensormittel T_{F} ist somit ausgerichtet, Licht aus dazu oberhalb angeordneten Strahlungsquellen aufzunehmen. Vorzugsweise ist das Sensormittel so ausgerichtet, dass Licht von vorn und oberhalb des Kraftfahrzeugs aufgenommen wird. Der Öffnungswinkel des Sensormittels beträgt vorzugsweise (rotationssymmetrisch) 30° relativ zu einer Achse, die senkrecht auf der lichtempfindlichen Oberfläche des Sensormittels steht. Durch die Ausrichtung des Sensormittels ist gewährleistet, dass kein direktes Licht von vorausfahrendem oder entgegenkommendem Verkehr von dem Sensormittel aufgenommen wird. Allenfalls Streulicht oder reflektiertes Licht findet den Weg von einem vorausfahrenden oder entgegenkommenden Fahrzeug zum Sensormittel.

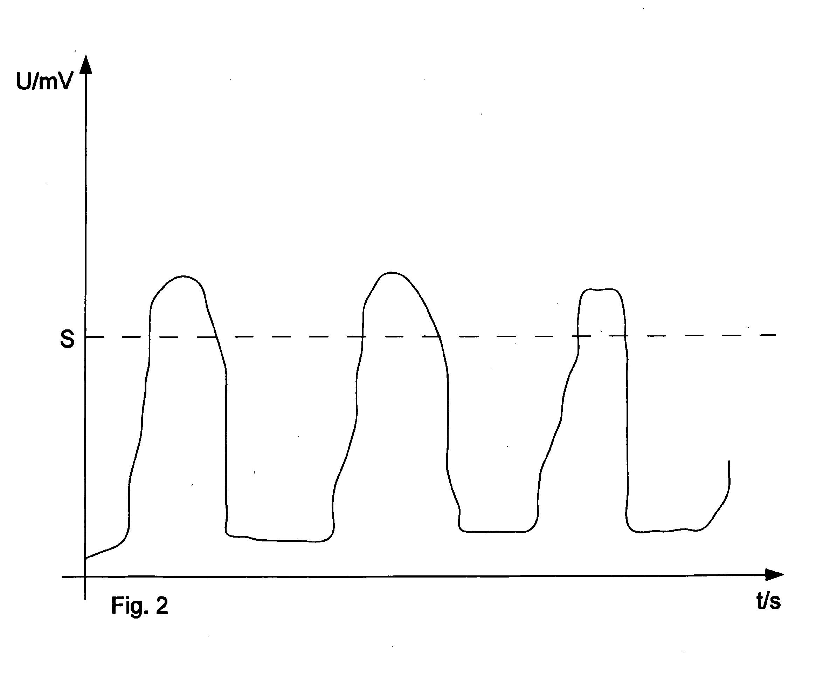

Das Sensormittel ist insbesondere so ausgerichtet, dass Licht von Laternen, die oberhalb oder am Straßenrand angeordnet sind, aufgenommen werden kann. Durchfährt ein Kraftfahrzeug mit einer erfindungsgemäßen Anordnung eine beleuchtete Straße bei Dunkelheit, kann am Ausgang des Sensormittels ein Signal anliegen, welches einen Verlauf hat, der beispielhaft in Fig. 2 dargestellt ist. Sobald der Lichtkegel der Laterne durchfahren wird, erhöht sich am Ausgang des Sensormittels die anliegende Spannung U.

Das von dem Sensormittel T_{F} erzeugte Signal wird von dem Auswertemittel µC ausgewertet. Durch die Auswertung soll ermittelt werden, ob die Umgebungshelligkeit ausreichend ist, um ohne Fernlicht die vor dem Fahrzeug liegende Straße zu durchfahren.

Das Fernlicht ist unnötig, sobald die Umgebungshelligkeit zum Beispiel wegen der Sonneneinstrahlung einen Schwellwert S überschreitet. Dieser Schwellwert S ist erreicht, wenn die Spannung am Ausgang des Sensormittels T_{F} einen Betrag S erreicht hat (Fig. 2).

Während die Auswertung des Signals des Sensormittels T_{F} in dem Auswertemittel µC im Falle von ausreichendem Tageslicht einfach ist, da das Sensorsignal den Stellwert S dauerhaft überschreitet, ist es im Falle einer durch Laternen beleuchteten Straße bei Nacht schwieriger, das Signal des Sensormittels T_{F} auszuwerten. Das in Fig. 2 dargestellte Diagramm zeigt deutlich, dass der Schwellwert S des Sensorsignals abschnittsweise immer dann überschritten wird, sobald das Kraftfahrzeug den Lichtkegel einer Laterne durchfährt. Die zwischen den Laternen liegenden Abschnitte sind dunkler, daher erzeugt das Sensormittel T_{F} in diesen Abschnitten ein deutlich geringeres unter dem Schwellwert S liegendes Sensorsignal. Dennoch ist die Benutzung des Fernlichts unnötig, zum Teil sogar gesetzlich untersagt.

Erfindungsgemäß ist daher vorgesehen, dass in dem Auswertemittel µC ein Zähler integriert ist, welcher beim Überschreiten des Schwellwerts S während eines ersten Zeitintervalls inkrementiert wird. Wird der Zähler innerhalb eines zweiten Zeitintervalls, das das erste Zeitintervall umfasst und länger als dieses andauert, nicht erneut inkrementiert, wird er zurückgesetzt. Erreicht der Zählerstand dagegen einen vorgegebenen Wert, kann davon ausgegangen werden, dass der durchfahrene Straßenabschnitt regelmäßig durch Laternen ausgeleuchtet wird. Die Benutzung des Fernlichtes kann dann oder muss dann unterbleiben. Das Auswertemittel µC erkennt daher in einem solchen Fall, dass eine ausreichende Umgebungshelligkeit vorliegt. Sobald eine ausreichende Umgebungshelligkeit vorliegt, sei es aufgrund der Sonneneinstrahlung, oder aber aufgrund einer ausreichenden Beleuchtung der Straße durch Laternen, erzeugt das Auswertemittel µC an seinem Ausgang ein Signal, welches an das Steuergerät des Kraftfahrzeugscheinwerfers zum Schalten des Fernlichtes gegeben wird.

### Bezugszeichenliste

- 1, 2: Leitung
- µC: Auswertemittel
- T_{F}: Sensormittel
- U: Spannung
- S: Stellwert

## Patentansprüche

1. Anordnung für Kraftfahrzeuge zum Erkennen der Umgebungshelligkeit während der Fahrt des Kraftfahrzeuges, insbesondere der Umgebungshelligkeit aufgrund von Laternen zur Straßenbeleuchtung, wobei die Anordnung ein Sensormittel (T_{F}) umfassend einen Fototransistor, ein Fotoelement oder eine Fotodiode und ein Auswertemittel (µC) aufweist, wobei das Sensormittel (T_{F}) geeignet und eingerichtet ist das Licht der Umgebung zu erfassen und ein der Helligkeit entsprechendes Signal (1) zu erzeugen und das Auswertemittel (µC) geeignet und eingerichtet ist zu erkennen, dass wegen des Umgebungslichts ein Einschalten und/oder Ausschalten des Fernlichts erforderlich ist,
**dadurch gekennzeichnet, dass**
das das Auswertemittel (µC) geeignet und eingerichtet ist beim Überschreiten eines Schwellwerts innerhalb eines ersten Zeitintervalls durch das von dem Sensormittel (T_{F}) erzeugte Signal eine Laterne zu erkennen und das Auswertemittel geeignet und eingerichtet ist bei einem mehrfachen Erkennen von Laternen (µC) innerhalb eines zweiten Zeitintervalls eine ausreichende Umgebungshelligkeit zu erkennen.

2. Anordnung nach Anspruch 1, **dadurch gekennzeichnet, dass** das Auswertemittel (µC) geeignet und eingerichtet ist einen Zug von Laternen und eine einzelne Laterne zu unterscheiden.

3. Anordnung nach Anspruch 1 oder 2, **dadurch gekennzeichnet, dass** das Auswertemittel (µC) geeignet und eingerichtet ist ein Signal (2) zum Anzeigen einer ausreichenden Umgebungshelligkeit aufgrund eines Zuges von Laternen zu erzeugen.

4. Anordnung nach einem der Ansprüche 1 bis 3, **dadurch gekennzeichnet, dass** die Anordnung ein Steuermittel aufweist, das geeignet und eingerichtet ist die Kraftfahrzeugscheinwerfer zum Ausschalten des Fernlichts anzusteuern, sofern eine ausreichende Umgebungshelligkeit, insbesondere ein Zug von Laternen erkannt ist.

5. Anordnung nach einem der Ansprüche 1 bis 4, **dadurch gekennzeichnet, dass** das Auswertemittel (µC) geeignet und eingerichtet ist beim Überschreiten eines Schwellwerts über ein drittes Zeitintervall hinaus eine ausreichende Umgebungshelligkeit zu erkennen.

6. Anordnung nach einem der Ansprüche 1 bis 5, **dadurch gekennzeichnet, dass** das Auswertemittel (µC) geeignet und eingerichtet ist beim Erkennen einer Laterne einen Zähler zu inkrementieren.

7. Anordnung nach Anspruch 6, **dadurch gekennzeichnet, dass** das Auswertemittel (µC) geeignet und eingerichtet ist den Zähler zurückzusetzen sofern nicht innerhalb eines zweiten Zeitintervalls eine weitere Laterne erkannt wird, d. h. der Zähler nicht ein weiteres Mal inkrementiert wird.

8. Anordnung nach Anspruch 7, **dadurch gekennzeichnet, dass** das Auswertemittel (µC) geeignet und eingerichtet ist eine ausreichende Umgebungshelligkeit zu erkennen sobald der Zählerstand innerhalb des zweiten Zeitintervalls einen vorgegebenen Wert übersteigt.

9. Anordnung nach einem der Ansprüche 1 bis 8, **dadurch gekennzeichnet, dass** das Sensormittel (T_{F}) einen Öffnungswinkel von mindestens +/- 20°, vorteilhaft von +/- 30° hat.

10. Anordnung nach einem der Ansprüche 1 bis 9, **dadurch gekennzeichnet, dass** das Sensormittel (T_{F}) eine lichtempfindliche Oberfläche hat, die 35° bis 55°, vorzugsweise 45° zu einer horizontalen Ebene ausgerichtet ist.

11. Anordnung nach einem der Ansprüche 1 bis 10, **dadurch gekennzeichnet, dass** das Auswertemittel (µC) eine Mikroprozessorsteuerung ist.

## Claims

1. Motor vehicle equipment for detecting the intensity of the ambient light while the vehicle is being driven and specifically the ambient light produced by lamps for street lighting, wherein the equipment comprises a sensor instrument (T_{F}), consisting of a photo transistor, a photocell or a photo diode, and an analyzer (µC) such that the sensor instrument (T_{F}) is designed and set up for detecting the ambient light and to generate a signal (1) in response to the brightness and such that the analyzer (µC) is designed and set up for recognizing that the ambient light requires the high beam to be turned on or off,
**characterized in that**
the analyzer (µC) is designed and set up for recognizing a street light if the signal generated by the sensor instrument (T_{F}) exceeds a threshold within a first interval and **in that** the analyzer (µC) is designed and set up for detecting sufficient ambient light if a plurality of street lights is recognized within a second interval.

2. Equipment of claim 1, **characterized in that** the analyzer (µC) is designed and set up for distinguishing between a series of street lights and a single street light.

3. Equipment of claim 1 or 2, **characterized in that** the analyzer (µC) is designed and set up for generating a signal (2) to indicate that sufficient ambient brightness is produced by a series of street lights.

4. Equipment of claims 1 to 3, **characterized in that** the equipment comprises a control unit designed and set up for actuating the vehicle's headlamps to turn on the high beam if the ambient light has been detected to be suitably bright, specifically as produced by a series of street lights.

5. Equipment of claims 1 to 4, **characterized in that** the analyzer (µC) is designed and set up for detecting ambient light of sufficient brightness if a threshold is exceeded beyond a third interval.

6. Equipment of claims 1 to 5, **characterized in that** the analyzer (µC) is designed and set up for incrementing a counter when a street light is recognized.

7. Equipment of claim 6, **characterized in that** the analyzer (µC) is designed and set up for resetting the counter, unless another street light is recognized within a second interval, i.e. unless the counter is incremented again.

8. Equipment of claim 7, **characterized in that** the analyzer (µC) is designed and set up for detecting ambient light of sufficient brightness if the counter reading exceeds a set limit within the second interval.

9. Equipment of claims 1 to 8, **characterized in that** the aperture angle of the sensor instrument (T_{F}) is at least +/- 20° or, preferably, +/- 30°.

10. Equipment of claims 1 to 9, **characterized in that** a surface of the sensor instrument (T_{F}) is photosensitive and positioned at a 35° to 55° angle or, preferably, at a 45° angle against a horizontal plane.

11. Equipment of claims 1 to 10, **characterized in that** the analyzer (µC) is a microprocessor controller.

## Revendications

1. Disposition pour véhicules automobiles pour percevoir la luminosité de l'environnement pendant la marche du véhicule, surtout la luminosité de l'environnement en raison des réverbères pour l'éclairage des routes, le dispositif présentant un moyen à capteur (T_{F}) contenant un phototransistor, un photo-couple ou une photodiode et un moyen d'exploitation (µC), le moyen à capteur étant approprié et ajusté à saisir la lumière de l'environnement et à générer un signal (1) conforme à la luminosité et le moyen d'exploitation (µC) étant approprié et ajusté à percevoir que l'allumage et/ou l'extinction du feu de route est nécessaire à cause de la luminosité de l'environnement,
**caractérisée en ce que**
le moyen d'exploitation (µC) est approprié et ajusté à percevoir un réverbère lors du dépassement d'une de seuil en l'espace d'un premier intervalle de temps par le signal produit par le moyen à capteur (T_{F}) et le moyen d'exploitation (µC) est approprié et ajusté à percevoir une luminosité d'environnement suffisante lors d'une perception multiple de réverbères (µC) en l'espace d'un deuxième intervalle de temps.

2. Disposition selon la revendication 1, **caractérisée en ce que** le moyen d'exploitation (µC) est approprié et ajusté à distinguer un réverbère individuel d'une colonne de réverbères.

3. Disposition selon la revendication 1 ou 2, **caractérisée en ce que** le moyen d'exploitation (µC) est approprié et ajusté à générer un signal (2) pour indiquer une luminosité d'environnement suffisante en raison d'une colonne de réverbères.

4. Disposition selon une des revendications 1 à 3, **caractérisée en ce que** la disposition présente un moyen de commande approprié est ajusté à commander les projecteurs automobiles pour éteindre le feu de route dans la mesure où une luminosité d'environnement suffisante, surtout une colonne de réverbères est perçue.

5. Disposition selon une des revendications 1 à 4, **caractérisée en ce que** le moyen d'exploitation (µC) est approprié et ajusté à percevoir une luminosité d'environnement suffisante lors du dépassement d'une valeur de seuil au-delà d'un troisième intervalle de temps.

6. Disposition selon une des revendications 1 à 5, **caractérisée en ce que** le moyen d'exploitation (µC) est approprié et ajusté à incrémenter un compteur de la perception d'un réverbère.

7. Disposition selon la revendication 6, **caractérisée en ce que** le moyen d'exploitation (µC) est approprié et ajusté à décrémenter le compteur dans la mesure où un autre réverbère ne sera pas perçu en l'espace d'un deuxième intervalle de temps, c'est-à-dîre lorsque le compteur ne sera pas incrémenté une autre fois.

8. Disposition selon la revendication 7, **caractérisée en ce que** le moyen d'exploitation (µC) est approprié et ajusté à percevoir une luminosité d'environnement suffisante dès que l'indication du compteur dépasse une valeur prédéterminée en l'espace d'un deuxième intervalle de temps.

9. Disposition selon une des revendications 1 à 8, **caractérisée en ce que** le moyen à capteur (T_{F}) présente un angle d'ouverture d'au moins ± 20°, favorable ± 30°.

10. Disposition selon une des revendications 1 à 9, **caractérisée en ce que** le moyen à capteur (T_{F}) présente une surface photosensible qui est orientée 35° à 55°, favorable 45°, vers un plan horizontal.

11. Disposition selon une des revendications 1 à 10, **caractérisée en ce que** le moyen d'exploitation (µC) est une commande à base de microprocesseurs.
